# EUROPEAN PATENT APPLICATION

(11) **EP 4 770 186 A1**
(43) Date of publication of application: **01.07.2026**
(21) Application number: 24872999.8
(22) Date of filing: 26.09.2024
(51) Int. Cl.: H04W 28/02, H04W 72/21, H04W 72/1268, H04W 8/24

(54) **METHOD AND APPARATUS FOR REPORTING DELAY STATUS IN WIRELESS COMMUNICATION SYSTEM**

(30) Priority: 26.09.2023 KR 20230129625
(71) Applicant: SAMSUNG ELECTRONICS CO., LTD., Yeongtong-gu Suwon-si, Gyeonggi-do 16677 (KR)
(72) Inventor: SUN, Weiping, Suwon-si, Gyeonggi-do 16677 (KR); KANG, Hyunjeong, Suwon-si, Gyeonggi-do 16677 (KR); BAEK, Sangkyu, Suwon-si, Gyeonggi-do 16677 (KR)
(74) Representative: Nederlandsch Octrooibureau
(86) International application number: PCT/KR2024/014641
(87) International publication number: WO 2025/071291

(57) **Abstract**

The disclosure relates to a 5G or 6G communication system for supporting a higher data transmission rate. A method performed by a terminal of a wireless communication system according to one embodiment of the present disclosure comprises the steps of: receiving, from a base station, configuration information indicating a remaining time threshold value for triggering a delay status report (DSR); triggering the DSR if the remaining time of a packet data convergence protocol (PDCP) discard timer of data buffered in a logical channel becomes smaller than the remaining time threshold value; and transmitting, to the base station, a medium access control-control element (MAC CE) for the DSR. The MAC CE includes a field indicating a value of the PDCP discard timer having the shortest remaining time for a logical channel group (LCG) of the logical channel at a time of a first symbol for an initial physical uplink shared channel (PUSCH) transmission that includes the MAC CE.

## Description

### [Technical Field]

The disclosure relates to a wireless communication system. More specifically, the disclosure relates to a method for reporting a delay status in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

As the mobile communication system has evolved as described above, the need for a terminal to report various information to a base station has emerged in order for the base station to efficiently allocate uplink resources.

### [Technical Solution]

In an embodiment of the disclosure, a method performed by a terminal in a wireless communication system is provided. The method includes receiving, from a base station, configuration information indicating a remaining time threshold value for triggering a delay status report (DSR), triggering the DSR in case that a remaining time of a packet data convergence protocol (PDCP) discard timer of data buffered in a logical channel is less than the remaining time threshold value, and transmitting, to the base station, a medium access control-control element (MAC CE) for the DSR. The MAC CE includes a field indicating a value of a PDCP discard timer having a shortest remaining time for a logical channel group (LCG) of the logical channel at a time of a first symbol for an initial physical uplink shared channel (PUSCH) transmission that includes the MAC CE.

In an embodiment of the disclosure, a method performed by a base station in a wireless communication system is provided. The method includes transmitting, to a terminal, configuration information indicating a remaining time threshold value for triggering a DSR, and receiving, from the terminal, a MAC CE for the DSR in case that a remaining time of a PDCP discard timer of data buffered in a logical channel of the terminal is less than the remaining time threshold value. The MAC CE includes a field indicating a value of a PDCP discard timer having a shortest remaining time for a LCG of the logical channel at a time of a first symbol for an initial PUSCH reception that includes the MAC CE.

In an embodiment of the disclosure, a terminal in a wireless communication system is provided. The terminal includes a transceiver and a controller. The controller is configured to receive, from a base station via the transceiver, configuration information indicating a remaining time threshold value for triggering a DSR, trigger the DSR in case that a remaining time of a PDCP discard timer of data buffered in a logical channel is less than the remaining time threshold value, and transmit, to the base station via the transceiver, a MAC CE for the DSR. The MAC CE includes a field indicating a value of a PDCP discard timer having a shortest remaining time for a LCG of the logical channel at a time of a first symbol for an initial PUSCH transmission that includes the MAC CE.

In an embodiment of the disclosure, a base station in a wireless communication system is provided. The base station includes a transceiver and a controller. The controller is configured to transmit, to a terminal via the transceiver, configuration information indicating a remaining time threshold value for triggering a DSR, and receive, from the terminal via the transceiver a MAC CE for the DSR in case that a remaining time of a PDCP discard timer of data buffered in a logical channel of the terminal is less than the remaining time threshold value. The MAC CE includes a field indicating a value of a PDCP discard timer having a shortest remaining time for a LCG of the logical channel at a time of a first symbol for an initial PUSCH reception that includes the MAC CE.

### [Advantageous Effects]

According to an embodiment of the disclosure, a base station may efficiently allocate uplink resources, based on information transmitted from a terminal.

### [Description of Drawings]

FIG. 1 illustrates a structure of an NR system according to an embodiment of the disclosure;
FIG. 2 illustrates a radio protocol structure in an NR system according to an embodiment of the disclosure.
FIG. 3 illustrates a remaining time of uplink data in a buffer of a terminal for each LCH and a corresponding amount of uplink data according to an embodiment of the disclosure.
FIG. 4 illustrates a reference time point of a remaining time according to an embodiment of the disclosure.
FIG. 5 illustrates an operation of discarding a plurality of PDUs of a PDU set according to an embodiment of the disclosure.
FIG. 6 illustrates a procedure in which a base station and a terminal identify whether the terminal supports a DSR and provide a DSR-related configuration through RRC signaling, according to an embodiment of the disclosure.
FIG. 7 illustrates a structure of a UE according to an embodiment of the disclosure.
FIG. 8 illustrates a structure of a base station according to an embodiment of the disclosure.

### [Mode for Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, a base station is an entity that allocates resources to terminals, and may be at least one of a Node B, a base station (BS), an eNode B, a gNode B, a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) long term evolution (LTE) standards and/or 3GPP new radio (NR) standards may be used for the sake of descriptive convenience. However, the disclosure is not limited by these terms and names, and may be applied in the same way to systems that conform other standards.

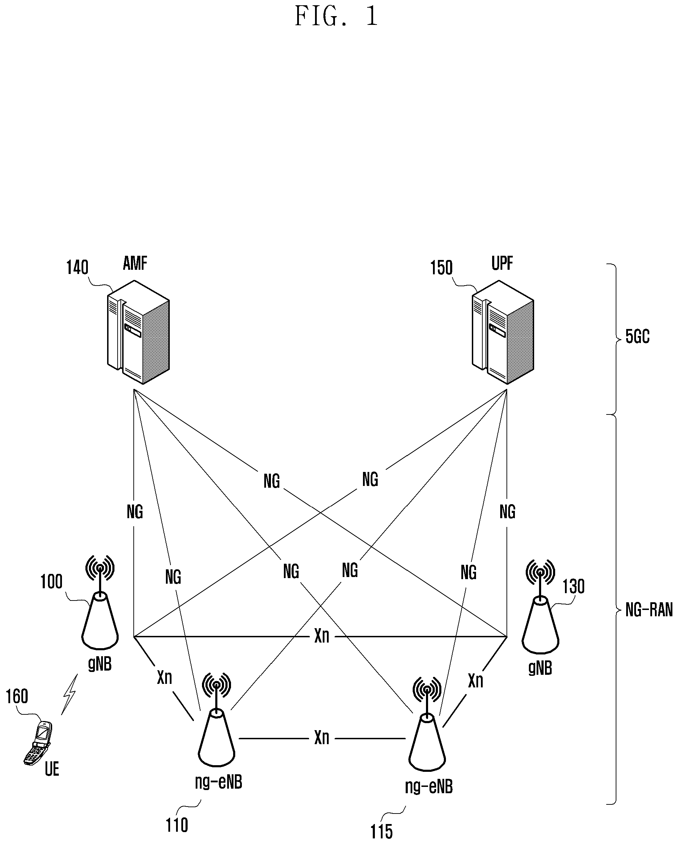

FIG. 1 illustrates a structure of an NR system according to an embodiment of the disclosure.

Referring to FIG. 1, a wireless communication system may include multiple base stations (for example, a gNB 100, an ng-eNB 110, an ng-eNB 120, and a gNB 130), an access and mobility management function (AMF) 140, and a user plane function (UPF) 150. Of course, the wireless communication system is not limited by the structure illustrated in FIG. 1, and may include a larger or smaller number of components than those in the structure illustrated in FIG. 1.

According to an embodiment of the disclosure, a user equipment (hereinafter UE or terminal) 160 may access an external network via the base stations 100, 110, 120, and 130 and the UPF 150.

In FIG. 1, the base stations 100, 110, 120, and 130 may provide radio access to UEs that access the network as cellular network access nodes. For example, in order to service users' traffic, the base stations 100, 110, 120, and 130 may collect state information of UEs 160, such as the UEs' buffer states, available transmission power states, and channel states, and perform scheduling accordingly, thereby supporting connections between the UEs and the core network (CN; in particular, CN in NR is referred to as "5GC").

In FIG. 1, the gNBs 100 and 130 may control multiple cells and employ an adaptive modulation & coding (hereinafter referred to as AMC) scheme for determining a modulation scheme and a channel coding rate according to a channel state of the UE 160.

The core network is a device responsible for various control functions as well as a mobility management function for UEs, and may be connected to multiple base stations 100, 110, 120, and 130. Also, the 5GC may interwork with the conventional LTE system.

A wireless communication system may be divided into a user plane (UP) associated with actual user data transmission and a control plane (CP) such as connection management. In FIG. 1, the gNB 100 and gNB 130 may use UP and CP technology defined in the NR technology, and although connected to the 5GC, the ng-eNB 110 and ng-eNB 120 may use UP and CP technology defined in the long term evolution (LTE) technology.

The AMF 140 is a device responsible for various control functions as well as a mobility management function for a UE, and may be connected to multiple base stations 100, 110, 120k, and 130.

The UPF 150 may refer to a type of gateway device for providing data transmission. Although not illustrate in FIG. 1, the NR wireless communication system may include a session management function (SMF). The SMF may manage a packet data network connection, such as a protocol data unit (PDU) session, provided to the UE 160.

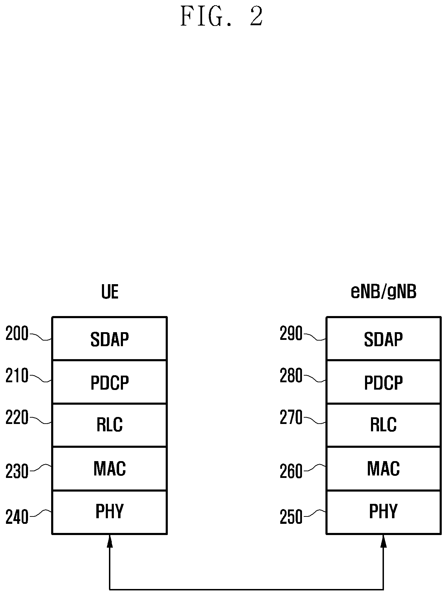

FIG. 2 illustrates a radio protocol structure in an NR system according to an embodiment of the disclosure.

Referring to FIG. 2, a radio protocol of an NR system may include a service data adaptation protocol (SDAP) 200 or 290, a packet data convergence protocol (PDCP) 210 or 280, a radio link control (RLC) 220 or 270, a medium access control (MAC) 230 or 260, and physical (PHY) 240 or 250 on each of UE and base station sides.

The service data adaptation protocol (SDAP) 200 or 290 may perform an operation for transferring user plane data, an operation for mapping between a quality of service (QoS) flow and a specific data radio bearer (DRB) for both uplink and downlink, an operation for marking a QoS flow identifier (ID) for both uplink and downlink, and an operation for mapping a reflective QoS flow to a data bearer for uplink SDAP PDUs. An SDAP configuration corresponding to each DRB may be provided from a higher RRC layer. Of course, the examples given above are not limiting.

The packet data convergence protocol (PDCP) 210 or 280 may be responsible for operations such as IP header compression/reconstruction. Also, the PDCP 210 or 280 may provide an in-sequence delivery function, an out-of-sequence delivery function, a reordering function, a retransmission function, and a ciphering and deciphering function. Obviously, the examples given above are not limiting.

The RLC 220 or 270 may reconfigure a PDCP protocol data unit (PDU) into appropriate sizes. Also, the RLC 220 or 270 may provide an in-sequence delivery function, an out-of-sequence delivery function, an automatic repeat request (ARQ) function, a concatenation, segmentation, and reassembly function, a re-segmentation function, a reordering function, a duplicate detection function, and an error detection function. Obviously, the examples given above are not limiting.

The MAC 230 or 260 may be connected to several RLC layer devices configured in a single UE, and perform operations of multiplexing RLC PDUs into an MAC PDU and demultiplexing RLC PDUs from an MAC PDU. Also, the MAC 230 or 260 may provide a mapping function, a scheduling information reporting function, an HARQ function, a priority handling function between logical channels, a priority handling function between UEs, an MBMS service identification function, a transport format selection function, and a padding function. Obviously, the examples given above are not limiting.

The physical (PHY) layers 240 and 250 may perform operations of channel-coding and modulating upper layer data, producing an orthogonal frequency-division multiplexing (OFDM) symbol therefrom and transmitting the same through a radio channel, or demodulating an OFDM symbol received through the radio channel, channel-decoding the same, and delivering the same to the upper layer. For additional error correction, the PHY layer may also use hybrid ARQ (HARQ), and a receiving end may use one bit to transmit whether a packet transmitted by a transmitting end is received. This one-bit information is referred to as HARQ acknowledgement (ACK)/negative-ACK (NACK) information.

In the case of LTE, downlink HARQ ACK or NACK information in response to uplink data transmission may be transmitted via a physical hybrid-ARQ indicator channel (PHICH). In the case of NR, whether retransmission is required or new transmission is to be performed may be determined through scheduling information of the UE via a physical dedicated control channel (PDCCH) that is used to transmit downlink/uplink resource allocation or the like. Uplink HARQ ACK/NACK information in response to downlink data transmission may be transmitted through a physical uplink control channel (PUCCH) or through a physical uplink shared channel (PUSCH). The PUCCH is generally transmitted in an uplink of a primary cell (PCell) as described below, but if supported by a UE, a base station may also additionally transmit the same to the corresponding UE in a secondary cell (SCell) as described below, which is referred to as a PUCCH SCell.

Although not illustrated in FIG. 2, a radio resource control (RRC) layer may exist as a higher layer than each PDCP layer of the UE and the base station, and the RRC layer may exchange access/measurement-related configuration control messages for radio resource control.

The PHY layer may include one or multiple frequencies/carriers, and a technology for simultaneously configuring and using multiple frequencies is referred to as carrier aggregation (hereinafter CA). In the case of using the CA, instead of using only one carrier for communication between a user equipment (UE) and a base station (E-UTRAN node B (eNB)), one primary carrier and multiple secondary carriers are additionally used and thus data capacity can be greatly increased as much as the number of secondary carriers. In LTE/NR, a cell in a base station, which uses the primary carrier, is referred to as a primary cell or PCell, and a cell in a base station, which uses the secondary subcarriers, is referred to as a secondary cell or SCell.

In a next-generation/5G (New Radio, NR) wireless communication system, in order to assist a base station in scheduling resources more efficiently, a UE needs to report a buffer status to the base station. A buffer status report (BSR) represents an amount of uplink data stored in a buffer of the UE and may be used for reporting same. According to specifications of NR, the UE may select, from a buffer size table, an index of a section corresponding to an amount of buffer uplink data to be reported among uplink data amount ranges of sections defined for respective indexes, and may include the selected index in the BSR.

In the NR system, buffer status reporting may be performed based on medium access control (MAC) layer signaling between the UE and the base station. For example, the UE may transfer a MAC PDU including a BSR MAC CE control element (MAC control element (CE)) to the base station when a BSR is triggered at a particular transmission time point. In this case, the BSR MAC CE may represent the amount of packets remaining in a transmission buffer of the UE after the MAC PDU is configured, in units of logical channel groups (hereinafter, referred to as LCGs). The base station may estimate the amount of uplink data currently remaining in the buffer of the UE by using the received BSR. In the NR system, the UE may manage an uplink data transmission buffer to be transmitted to the base station with respect to each of multiple LCGs (e.g., eight LCGs).

In addition, in the NR system, a particular type of uplink data (e.g., extended reality (XR) uplink data) may have a valid expiry time (delay budget), for example, a remaining time which is a remaining valid expiry time. In order for the uplink data to be used as valid data, the uplink data needs to arrive at an uplink server within a predetermined remaining time, based on a time generated in the application layer of the UE. If the uplink data has failed to arrive at the uplink server within the predetermined remaining time, the data may lose its application value.

As described above, a UE buffer size reported by a BSR may indicate the total amount of uplink data stored in the buffer of the UE. However, the base station may not know how much data among the total uplink data is closer to delay budget expiration, for example, how much data has a short remaining time.

If the base station knows remaining times of uplink data in the UE buffer and amounts of uplink data corresponding to respective remaining times, the base station may reflect such information to perform uplink resource allocation such that data having a relatively short remaining time is transmitted first. Accordingly, more uplink data may be transmitted before remaining times expire, thereby improving cell capacity.

On the other hand, if particular uplink data is data having a very short remaining time, a time until actual transmission after reporting through a BSR may exceed the remaining time. In such a case, the data may be transmitted after already losing its application value or may be discarded before a transmission time point. Accordingly, transmission of valid data may fail on allocated uplink resources, thereby causing resource waste. Therefore, the disclosure proposes methods in which the UE includes, in information reported to the base station, a remaining time satisfying a pre-defined particular remaining time criterion (an upper limit or a lower limit), or a remaining time and an amount of data so as to enable the base station to more efficiently allocate uplink resources to the UE by using the information.

An embodiment of the disclosure provides a method of reporting remaining times of uplink data stored in a transmission buffer of a UE and/or amounts of the data corresponding to the remaining times to a base station, and using same for uplink scheduling by the base station.

The UE may trigger a buffer status report (BSR) in a corresponding cell group if at least one of the following conditions or a combination thereof is satisfied.
- Condition 1-1: New uplink data has been generated in a logical channel (LCH) belonging to a logical channel group (LCG), and the priority of the LCH is higher than the priorities of other LCHs in which uplink data exists. At this time, the UE may consider that a triggered regular BSR has been triggered by the LCH in which the new uplink data has been generated.
- Condition 1-2: New uplink data has been generated in a logical channel (LCH) belonging to a logical channel group (LCG), and no uplink data exists in any LCHs belonging to all LCGs before the generation of the uplink data. At this time, the UE may consider that a triggered regular BSR has been triggered by the LCH in which the new uplink data has been generated.
- Condition 1-3: When a configured timer (e.g., retxBSR-Timer) expires, uplink data exists in at least one LCH, and the LCH belongs to an LCG. At this time, the UE may consider that a triggered regular BSR has been triggered by an LCH having the highest priority among the LCHs in which the uplink data exists.

As an embodiment of the disclosure, in a state in which a regular BSR has already been triggered, when a particular timer (e.g., logicalChannelSR-DelayTimer) for an LCH having triggered the regular BSR is not in operation, the UE may trigger a scheduling request (SR) corresponding to the LCH for the regular BSR if at least one of the following conditions or a combination thereof is satisfied.
- Condition 2-1: There is no uplink shared channel (UL-SCH) resource for initial transmission (or new transmission).
- Condition 2-2: A configured grant(s) is configured in a corresponding MAC entity, and the LCH having triggered the regular BSR has logicalChannelSR-Mask configured as false.
- Condition 2-3: There is an UL-SCH resource for initial transmission, but the UL-SCH resource is unavailable for the LCH having triggered the regular BSR due to a logical channel prioritization (LCP) mapping limitation.

Here, the logicalChannelSR-Mask may be a parameter for controlling SR triggering when a configured grant is configured.

As an embodiment of the disclosure, the UE may report a remaining time situation of uplink data in the transmission buffer to the base station through a particular MAC CE. For example, the MAC CE may be referred to as a delay status report (DSR) MAC CE.

According to an embodiment of the disclosure, with regard to a DSR, the base station may configure, through an RRC message, at least one of the following information elements or parameters or a combination thereof for a particular MAC entity (or cell group) of the UE.
- Whether to report a remaining time may be configured for each LCH/LCG. According to an embodiment, an LCH/LCG for which a remaining time is reported may be called a dsr-lch/dsr-lcg. For example, when a particular LCG is configured as a dsr-lcg, all the LCHs belonging to the LCG may be considered as dsr-lchs. For example, an LCG including one or more dsr-lchs may be considered as a dsr-lcg. For example, an LCG/LCH for which a DSR reporting remaining time criterion or a DSR trigger remaining time criterion described below is configured, may be considered as a dsr-lcg/dsr-lch.
- A DSR reporting remaining time criterion may be configured. The criterion may be an upper limit of remaining time, or a lower limit, or an upper limit and a lower limit. For example, when an upper limit of remaining time is configured, the UE may report a remaining time and/or a buffer size for uplink data having a remaining time less than or equal to the configured upper limit of remaining time. For example, when a lower limit of remaining time is configured, the UE may report a remaining time and/or a buffer size for uplink data having a remaining time greater than or equal to the configured lower limit of remaining time. For example, when an upper limit and a lower limit of remaining time are configured, the UE may report a remaining time and/or a buffer size for uplink data having a remaining time greater than or equal to the lower limit and less than or equal to the upper limit. For example, the remaining time criterion may be configured as one or multiple criteria for each LCH, each LCG, each MAC entity, or each UE. For example, when no DSR reporting remaining time criterion is configured, the UE may consider a DSR trigger remaining time criterion described below as the DSR reporting remaining time criterion. For example, when multiple DSR reporting remaining time criteria or DSR trigger remaining time criteria are configured, the UE may trigger a DSR for each DSR trigger remaining time criterion, and/or the UE may report, for each DSR reporting remaining time criterion or DSR trigger remaining time criterion, a remaining time and/or buffer size for uplink data having a remaining time satisfying a corresponding criterion to the base station through a DSR.
- An upper limit on the number of remaining time fields may be configured. For example, an upper limit on the number of pairs each including a remaining time field and a remaining time-specific buffer size field may be configured. The upper limit on the number of remaining time fields may be configured for each LCH, each LCG, or the entire DSR MAC CE. When the upper limit on the number of remaining time fields is configured, the UE may include, in a DSR, a number of remaining time fields or a number of pairs of a remaining time field and a remaining time-specific buffer size field, which is less than or equal to the upper limit configured by the base station, for each LCH, each LCG, or the entire DSR.
- A DSR trigger remaining time criterion may be configured. For example, the DSR trigger remaining time criterion may be an upper limit of remaining time, or a lower limit, or an upper limit and a lower limit. The DSR trigger remaining time criterion may be configured for each LCH, each LCG, each MAC entity, or each UE. For example, when the DSR trigger remaining time criterion is not separately configured, the UE may apply a DSR reporting remaining time criterion configured for each LCH/LCG/MAC entity/cell group/UE as the DSR trigger remaining time criterion without change, or may determine the DSR trigger remaining time criterion by introducing a particular offset to the DSR reporting remaining time criterion. The offset may be previously determined or configured by the base station through RRC. For example, the DSR trigger remaining time criteria may be one or multiple for each LCG.

According to an embodiment of the disclosure, a remaining time-related value/field/variable/parameter may be expressed in the form of an integer having a particular time unit. The integer may express an absolute time or a relative time based on a particular time point. For example, the time unit may have a composite form of one or multiple units among microseconds, milliseconds, seconds, symbols, slots, subframes, and frames.

According to an embodiment, a remaining time table may be pre-defined, and each index/codepoint included in the remaining time table may be defined to indicate a particular remaining time section. The pre-defined remaining time table may refer to a table which the UE and the base station store in advance according to a specification. According to an embodiment, multiple remaining time tables may be pre-defined, and the base station may indicate one thereamong to be actually applied through RRC, a MAC CE, or downlink control information (DCI).

Different indexes/codepoints in the remaining time table may indicate nonoverlapping different remaining time sections. A maximum remaining time included in the remaining time table may be equal to a maximum value of discardTimer configured in PDCP-Config in the 38.331 specification, or may be a value obtained by applying a particular offset to the maximum value. A particular index/codepoint (e.g., the last index/codepoint) of the remaining time table may indicate all time sections that are equal to or greater than the maximum remaining time. For example, in case that the remaining time table includes indices/codepoints, the number of which is 2^{k} or is less than or equal to 2^{k} and greater than 2^{k-1}, a remaining time field or a minimum remaining time field of a DSR may have a length of k bits.

According to an embodiment of the disclosure, a remaining time-related value/field/variable/parameter may be expressed by a particular index/codepoint of the remaining time table. For example, when a value indicated by a remaining time field of a DSR, or an upper limit or a lower limit of remaining time configured by the base station is t, this may indicate an index/codepoint t of the remaining time table.

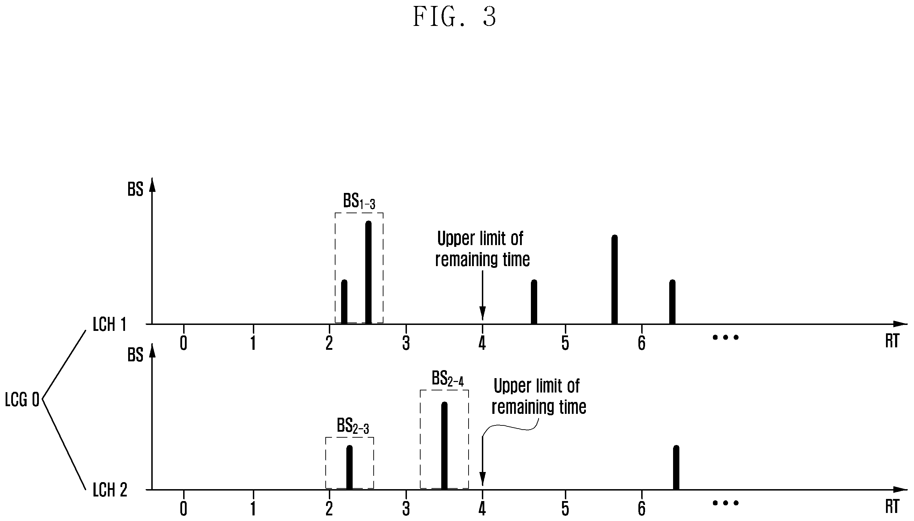

FIG. 3 is a diagram illustrating a remaining time of uplink data in a buffer of a UE for each LCH and a corresponding amount of uplink data according to an embodiment of the disclosure.

According to an embodiment, the UE may report a remaining time situation of uplink data in a corresponding LCG buffer for each LCG (dsr-lcg) through a DSR.

As an embodiment of the disclosure, a minimum unit section of remaining time reported through a DSR may be a section indicated by each index/codepoint of a remaining time table when the index/codepoint is indicated by a remaining time field, and may be a particular time unit when an integer having the time unit is indicated.

According to an embodiment, a remaining time, a remaining time-specific buffer size, or a delay-critical buffer size reported through a DSR may be reported only for uplink data remaining in a particular LCH/LCG/MAC entity/cell group buffer, excluding uplink data included in a MAC PDU including a DSR MAC CE after the MAC PDU is configured.

The DSR MAC CE may include one or more of the following information elements or fields.
- LCH or LCG indicator
   ■ A corresponding LCG/LCH may be indicated by an LCG/LCH ID field or a bit at a particular position in a bitmap. For example, the LCG/LCH indicator may be used for the purpose of indicating the presence or absence of a remaining time field, a minimum remaining time field, a pair of a (minimum) remaining time field and a corresponding remaining time-specific buffer size field, or a delay-critical buffer size field, which corresponds to the DSR MAC CE.
- Remaining time field
   ■ If the base station configures only a remaining time criterion for each LCH, each LCG, or the entire MAC entity/cell group, without configuring an upper limit on the number of remaining time fields:
      ◆ The UE may indicate only a remaining time of uplink data satisfying the remaining time criterion among uplink data in a corresponding (one or multiple) LCH (dsr-lch) buffer for each LCH, each LCG, or the entire MAC entity/cell group. In this case, the UE may add a corresponding remaining time field when there is uplink data corresponding to the buffer for each minimum unit section of remaining time. Referring to FIG. 3, for example, when the base station configures 4 as an upper limit of remaining time for both LCH 1 and LCH 2, and the UE is to report a remaining time for each LCG, there may be two remaining time fields corresponding to LCG 0 (including LCH 1 and LCH 2), and the UE may indicate remaining time 3 (reflecting BS₁₋₃ of LCH 1 and BS₂₋₃ of LCH 2) and remaining time 4 (reflecting BS₂₋₄ of LCH 2), respectively.
   ■ If the base station configures both a remaining time criterion and an upper limit on the number of remaining time fields for each LCH, each LCG, or the entire MAC entity/cell group:
      ◆ The UE may indicate only a remaining time of uplink data satisfying the remaining time criterion among uplink data in a corresponding (one or multiple) LCH (dsr-lch) buffer for each LCH, each LCG, or the entire MAC entity/cell group. In this case, the UE may add a corresponding remaining time field when there is uplink data corresponding to the buffer for each minimum unit section of remaining time. For example, the number of remaining time fields for each LCH, each LCG, or each MAC entity/cell group added by the UE may be up to an upper limit on the number of remaining time fields configured by the base station for each LCH, each LCG, or each MAC entity/cell group (or the upper limit on the number of remaining time fields minus one). For example, the UE may add remaining time fields in ascending order starting from the remaining time field having the shortest remaining time. Referring to FIG. 3, for example, when the base station configures 4 as an upper limit of remaining time for both LCH 1 and LCH 2, and configures 1 as an upper limit on the number of remaining time fields for LCG 0, there may be one remaining time field corresponding to LCG 0, and the UE may indicate remaining time 3 (reflecting BS₁₋₃ of LCH 1 and BS₂₋₃ of LCH 2).
   ■ If the base station does not configure a remaining time criterion for each LCH, each LCG, or the entire MAC entity/cell group, and configures only an upper limit on the number of remaining time fields:
      ◆ The UE may indicate only a remaining time of uplink data in a corresponding (one or multiple) LCH (dsr-lch) buffer for each LCH, each LCG, or the entire MAC entity/cell group. In this case, the UE may add a corresponding remaining time field when there is corresponding uplink data for each minimum unit section. For example, the number of remaining time fields for each LCH, each LCG, or each MAC entity/cell group added by the UE may be up to an upper limit on the number of remaining time fields configured by the base station for each LCH, each LCG, or each MAC entity/cell group (or the upper limit on the number of remaining time fields minus one). For example, the UE may add remaining time fields in ascending order starting from the remaining time field having the shortest remaining time. Referring to FIG. 3, for example, when the base station configures 1 as an upper limit on the number of remaining time fields for LCG 0, and a remaining time is reported for each LCG, there may be one remaining time field corresponding to LCG 0, and the UE may indicate remaining time 3 (reflecting BS₁₋₃ of LCH 1 and BS₂₋₃ of LCH 2).
- Minimum remaining time field: The UE may indicate a remaining time section including the remaining time of uplink data having the shortest remaining time among uplink data in a corresponding (one or multiple) LCH (dsr-lch) buffer for each LCH, each LCG, or the entire MAC entity/cell group. At this time, the UE may add a remaining time field to indicate the remaining time section. The remaining time field may be referred to as a minimum remaining time field. For example, the minimum remaining time field may be added only when a corresponding remaining time section satisfies a remaining time criterion configured by the base station in a case where the base station configures the remaining time criterion. Referring to FIG. 3, for example, when the base station configures 4 as an upper limit of remaining time for LCG 0, and a remaining time is reported for each LCG, LCG 0 may have one minimum remaining time field, and the field may indicate remaining time 3.
- (Minimum) remaining time-specific buffer size field: When one or multiple remaining time fields corresponding to a particular LCH/LCG/MAC entity/cell group exist and/or a minimum remaining time field corresponding to a particular LCH/LCG/MAC entity/cell group exists, a (minimum) remaining time-specific buffer size field indicating the amount of uplink data having a remaining time belonging to a remaining time section indicated by a corresponding field in a corresponding LCH/LCG/MAC entity/cell group buffer may be included for each remaining time or minimum remaining time field. Referring to FIG. 3, for example, when an upper limit of remaining time configured by the base station for LCG 0 is 4, and the UE performs remaining time reporting for each LCG, LCG 0 may have two remaining time fields, and the fields may indicate remaining time 3 and remaining time 4, respectively. For example, one remaining time-specific buffer size field corresponding to a remaining time field indicating the remaining time 3 may be added. The field may indicate a buffer size of BS₁₋₃+BS₂₋₃ corresponding to the remaining time 3. For example, one remaining time-specific buffer size field corresponding to a remaining time field indicating the remaining time 4 may be added. The field may indicate a buffer size of BS₂₋₄ corresponding to the remaining time 4.
- Delay-critical buffer size field: When the base station configures a remaining time criterion for each LCH/LCG/MAC entity/cell group, a delay-critical buffer size field which indicates an amount of uplink data having a remaining time satisfying the remaining time criterion configured by the base station among uplink data in a corresponding (one or multiple) LCH (dsr-lch) buffer may be included. The number of delay-critical buffer size fields may exist for each LCH/LCG/MAC entity/cell group according to remaining time criteria configured by the base station. For example, if the base station configures criterion 1 having upper limit 1 of remaining time and criterion 2 having upper limit 2 and lower limit 2 for a particular LCH/LCG/MAC entity/cell group, there may be two delay-critical buffer size fields corresponding to the LCH/LCG/MAC entity/cell group. For example, a first delay-critical buffer size field may indicate an amount (uplink buffer size) of uplink data having a remaining time satisfying criterion 1, and a second delay-critical buffer size field may indicate an amount (uplink buffer size) of uplink data having a remaining time satisfying criterion 2. For example, the base station may configure remaining time criterion(s) in the form of a list including multiple integers. When the integers are arranged in ascending order, two adjacent values may be regarded as a single remaining time criterion, and may be regarded as a lower limit and an upper limit of the remaining time criterion. In addition, the smallest value may be considered as an upper limit of a particular remaining time criterion, and the remaining time criterion may be a remaining time criterion having only an upper limit. For example, when the base station has configured [x1, x2, x3] as a list indicating a remaining time criterion (e.g., x1 < x2 < x3), the UE may interpret that the base station has configured three remaining time criteria, and may interpret the respective criteria as 1) a remaining time criterion having an upper limit of x1, 2) a remaining time criterion having a lower limit of x1 and having an upper limit of x2, and 3) a remaining time criterion having a lower limit of x2 and having an upper limit of x3.

In the disclosure, a remaining time criterion may refer to a DSR reporting remaining time criterion or a DSR trigger remaining time criterion configured by the base station through RRC.

For example, the (minimum) remaining time-specific buffer size field or the delay-critical buffer size field may indicate an index of a corresponding buffer size section in a buffer size table in which an index for each buffer size section is pre-defined, by referring to the table. The buffer size table may be one of a long buffer size (BS) table for an 8-bit buffer size field defined in an NR system, a short BS table for a 5-bit buffer size field, and one or more new BS tables which are newly definable in the future. When multiple applicable candidate BS tables exist as described above, a BS table indicator indicating which table a corresponding (minimum) remaining time-specific buffer size field or delay-critical buffer size field refers to may be included in a DSR MAC CE reported by the UE for each (minimum) remaining time-specific buffer size field or delay-critical buffer size field, each LCH, each LCG, or each MAC entity/cell group. For example, multiple candidate BS tables that the UE may refer to for a particular LCH/LCG may exist. In this case, when a buffer size indicated by a (minimum) remaining time-specific buffer size field or a delay-critical buffer size field of the LCH/LCG belongs to buffer sections defined in the multiple candidate BS tables, the UE may select a candidate BS table in which a buffer section to which the buffer size belongs and has the smallest size (the smallest difference between the upper and lower limits) among the multiple candidate BS tables, or may select a candidate BS table in which a particular partial buffer size section rather than "0 to Infinity" is defined as the entire buffer size section. The UE may report the buffer size to the base station by referring to one selected BS table.

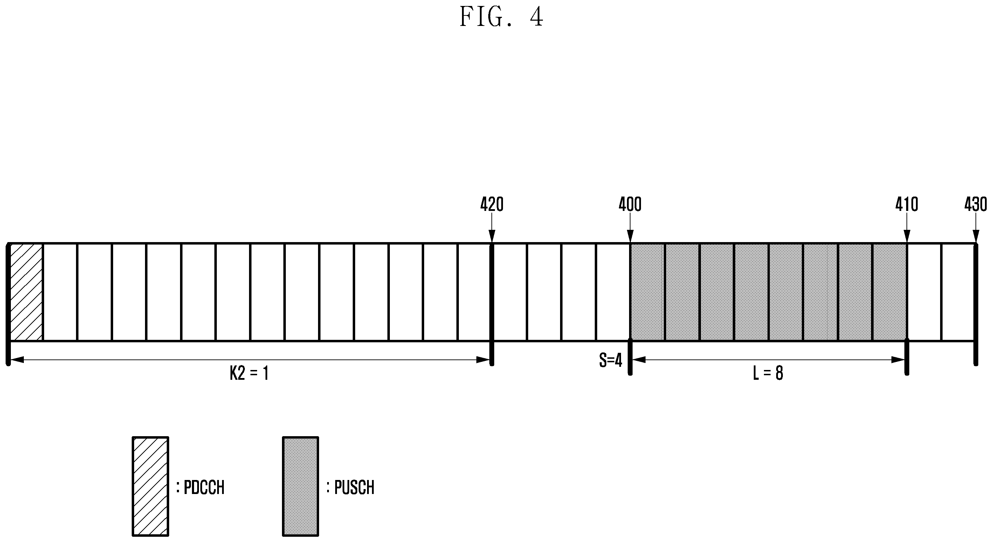

FIG. 4 is a diagram illustrating a reference time point of a remaining time according to an embodiment of the disclosure.

Referring to FIG. 4, according to an embodiment of the disclosure, a reference time point (reference time) of a remaining time which is indicated by a remaining time field or a minimum remaining time field of a DSR MAC CE, or is applied to a delay-critical buffer size field is illustrated.

According to an embodiment, the reference time point of a remaining time may indicate a time point on which the remaining time is based.

The UE may normally transmit a MAC PDU or a transport block (TB) including a DSR MAC CE to the base station through a PUSCH resource allocated by the base station. According to an embodiment, as the PUSCH resource, a particular PUSCH resource may be allocated to the UE by the base station through dynamic scheduling by using DCI. Alternatively, multiple periodic PUSCH resources may be allocated to the UE in the form of a configured grant (CG).

The reference time point of a remaining time which is indicated by a remaining time field or a minimum remaining time field of a DSR MAC CE, or is applied by a delay-critical buffer size field may be at least one of the following options or a combination thereof.
- A first symbol of a PUSCH resource for initial transmission (initial transmission) of a MAC PDU or TB including a DSR MAC CE, or a start time point 400 of the first symbol
- A last symbol of a PUSCH resource for initial transmission (initial transmission) of a MAC PDU or TB including a DSR MAC CE, or an end time point 410 of the last symbol
- A start time point 420 of a slot to which a PUSCH resource for initial transmission (initial transmission) of a MAC PDU or TB including a DSR MAC CE belongs to, or a first slot to which a PUSCH resource over multiple slots belongs when the PUSCH resource is scheduled
- An end time point 430 of a slot to which a PUSCH resource for initial transmission (initial transmission) of a MAC PDU or TB including a DSR MAC CE belongs to, or a last slot to which a PUSCH resource over multiple slots belongs when the PUSCH resource is scheduled

According to an embodiment, the PUSCH resource may be a resource allocated by the base station through a dynamic grant based on dynamic scheduling, or a resource allocated by the base station through a configured grant.

According to an embodiment, one or multiple reference time point fields indicating the reference time point of a remaining time may be added to a DSR. For example, a reference time point field may indicate a reference time point applied to calculate a remaining time value indicated by a remaining time field of a DSR or uplink data indicated by a delay-critical buffer size field. For example, the reference time point field may indicate an absolute time, or may indicate a relative time based on a particular time point. For example, the reference time point field may be expressed as one unit of a frame, a subframe, a slot, or a symbol, or a combination of multiple units thereof, or as an absolute time value such as microseconds, milliseconds, or seconds. For example, the reference time point field may indicate the entire universal time coordinated (UTC) time, a particular location/number of bits, a particular location/number of least significant bits (LSBs), or a particular location/number of most significant bits (MSBs).

According to an embodiment, the remaining time point field of a DSR may be a field indicating a relative difference with respect to a particular upper limit of remaining time configured by the base station, instead of an absolute remaining time. For example, the relative difference may be a value obtained by subtracting a corresponding remaining time from the upper limit of remaining time, or may be a value indicating how many times less/greater the remaining time is than the upper limit of remaining time or indicating a percentage (%) thereof in a comparison between the upper limit of remaining time and the remaining time. For example, when multiple remaining time fields for each LCH/LCG are included in a DSR, a first remaining time field may indicate an absolute remaining time for a corresponding LCH/LCG, and the subsequently included remaining time fields may indicate a relative time difference with respect to a remaining time indicated by an immediately preceding remaining time field(s).

According to an embodiment, a remaining time of uplink data in an LCH (dsr-lch) buffer at a particular time point may be the same as a remaining time value of PDCP discardTimer of the uplink data at the time point, or may be the same as a value obtained by applying a particular offset to the remaining time value of PDCP discardTimer. The offset may be previously defined or configured by the base station through RRC.

According to an embodiment, a remaining time of a particular PDU in a particular PDU set at a particular time point may be considered/configured/reconfigured as a remaining time of a PDU having the smallest remaining time, a PDU generated earliest in the application, or a PDU arriving earliest at the PDCP, among all PDUs included in the PDU set, based on the time point.

According to an embodiment, a remaining time of a particular PDU in a particular PDU set at a particular time point, when PDU-Set integrated handling information (PSIHI) is configured for a QoS flow to which the PDU set belongs, may be considered/configured/reconfigured as a remaining time of a PDU having the smallest remaining time, a PDU generated earliest in the application, or a PDU arriving earliest at the PDCP, among all PDUs included in the PDU set, based on the time point.

According to an embodiment, a remaining time of a particular PDU in a particular PDU set at a particular time point, when a PDU set level PDCP discardTimer is configured for the PDU set, may be considered/configured/reconfigured as a remaining time of the PDU set level PDCP discardTimer of the PDU set at the time point or a value obtained by applying a particular offset configured by the base station to the remaining time. The offset may be previously defined or configured by the base station through RRC.

According to an embodiment, remaining times of all PDUs included in a particular PDU set at a particular time point may be calculated as a remaining PDU set delay budget (PSDB) or remaining access network (AN) PSDB of the PDU set at the time point, or as a value obtained by applying a particular offset to the remaining time value. The offset may be previously defined or configured by the base station through RRC.

For example, a PSDB of a particular QoF flow may be defined as follows.
- The PDU Set Delay Budget (PSDB) defines an upper bound for the delay that a PDU Set may experience for the transfer between the UE and the N6 termination point at the UPF, i.e., the duration between the reception time of the first PDU (at the N6 termination point for DL or the UE for UL) and the time when all PDUs of a PDU Set have been successfully received (at the UE for DL or N6 termination point for UL).

As an embodiment of the disclosure, an PSDB of a particular QoS flow may be calculated by subtracting a core network (CN) PDB of the QoS Flow from a PSDB of the QoS flow.

According to an embodiment, a DSR MAC CE trigger condition may be at least one of the following conditions.
- Condition 2-1: If uplink data satisfying a DSR trigger remaining time criterion has been generated in a particular LCG (dsr-lcg)/LCH (dsr-lch), and there is no uplink data satisfying the criterion in a MAC entity, a cell group, or an LCG to which the LCG (dsr-lcg)/LCH (dsr-lch) belongs, a DSR MAC CE may be triggered. For example, the fact that uplink data satisfying a DSR trigger remaining time criterion is generated may indicate that new uplink data satisfying the criterion is generated, or that uplink data previously stored in a buffer satisfies the criterion due to a decrease in the remaining time thereof. For example, a DSR triggered by condition 2-1 above may be referred to as a regular DSR.
- Condition 2-2: If uplink data satisfying a DSR trigger remaining time criterion has been generated in a particular LCG (dsr-lcg)/LCH (dsr-lch), and an LCH/LCG priority level of the uplink data is higher than that of other uplink data satisfying the criterion in a MAC entity, a cell group, or an LCG to which the LCG (dsr-lcg)/LCH (dsr-lch) belongs, a DSR MAC CE may be triggered. For example, the fact that uplink data satisfying a DSR trigger remaining time criterion may be generated may indicate that new uplink data satisfying the criterion is generated, or that existing uplink data satisfies the criterion due to a decrease in the remaining time thereof. For example, a DSR triggered by condition 2-2 above may be referred to as a regular DSR.
- Condition 2-3: If uplink data satisfying a DSR trigger remaining time criterion has been generated in a particular LCG (dsr-lcg)/LCH (dsr-lch), and a remaining time of the uplink data is less than that of other uplink data satisfying the criterion in a MAC entity, a cell group, or an LCG to which the LCG (dsr-lcg)/LCH (dsr-lch) belongs, a DSR MAC CE may be triggered. For example, the fact that uplink data satisfying a DSR trigger remaining time criterion is generated may indicate that new uplink data satisfying the criterion is generated, or that uplink data previously stored in a buffer satisfies the criterion due to a decrease in the remaining time thereof. For example, a DSR triggered by condition 2-3 above may be referred to as a regular DSR.
- Condition 2-4: The base station may configure a DSR retransmission timer (e.g., retxDSR-Timer) for the UE. If uplink data satisfying a DSR trigger remaining time criterion exists in at least one LCG (dsr-lcg)/LCH (dsr-lch) at a time point at which the DSR retransmission timer expires, a DSR MAC CE may be triggered. For example, the DSR retransmission timer may be a timer different from a BSR retransmission timer (e.g., retxBSR-Timer). For example, the DSR retransmission timer may be the same timer as the BSR retransmission timer. For example, a size of the DSR retransmission timer may be configured by the base station through RRC for each MAC entity/cell group/LCG. For example, a DSR triggered by expiration of the DSR retransmission timer may be considered as being triggered in an LCG (dsr-lcg)/LCH (dsr-lch) having the highest priority among LCGs (dsr-lcgs)/LCHs (dsr-lchs) in which uplink data satisfying a DSR trigger remaining time criterion exists at a time point at which the timer expires. The UE performs logical channel prioritization (LCP) for an available UL-SCH resource, and then when the UL-SCH resource includes a DSR MAC CE and a corresponding subheader, the UE may start/restart the DSR retransmission timer. For example, a DSR triggered by expiration of the DSR retransmission timer may be referred to as a regular DSR.
- Condition 2-5: The base station may configure a periodic DSR timer (e.g., periodicDSR-Timer) for the UE. At a time point at which the periodic DSR timer expires, a DSR MAC CE may be triggered. For example, the periodic DSR timer may be a timer different from a periodic BSR timer (periodicBSR-Timer). For example, the periodic DSR timer may be the same timer as the periodic BSR timer. For example, the UE performs logical channel prioritization (LCP) for an available UL-SCH resource, and then when the UL-SCH resource includes a DSR MAC CE and a corresponding subheader rather than a truncated DSR, the UE may start/restart the periodic DSR timer. For example, a size of the periodic DSR timer may be configured by the base station through RRC for each MAC entity/cell group/LCG. For example, when the base station configures a size of the periodic DSR timer as "infinity," the timer may not expire, and thus no DSR trigger may be caused by expiration of the periodic DSR timer.
- Condition 2-6: When a padding bit is generated as a result of LCP for a particular UL-SCH, if uplink data satisfying a DSR trigger remaining time criterion exists in at least one LCG (dsr-lcg)/LCH (dsr-lch), the UE may trigger a padding DSR transmitted instead of the padding bit. For example, a truncated DSR may refer to a DSR MAC CE in which a padding DSR transmitted using a padding bit fails to accommodate all DSR fields due to insufficient padding bits and thus only some DSR fields are transmitted.
- Condition 2-7: If a remaining time of uplink data having the shortest remaining time among uplink data in a particular LCG (dsr-lcg) satisfies a DSR trigger remaining time criterion corresponding to the LCG (dsr-lcg) and configured by the base station, a DSR may be triggered. For example, the DSR trigger remaining time criterion may be an upper limit of remaining time, may be a lower limit of remaining time, or may include a lower limit of remaining time and an upper limit of remaining time. For example, the satisfaction of the remaining time criterion may indicate that a remaining time of uplink data is less than or is less than or equal to a configured upper limit of remaining time. For example, the satisfaction of the remaining time criterion may indicate that a remaining time of uplink data is greater than or is greater than or equal to a configured lower limit of remaining time. For example, the satisfaction of the remaining time criterion may indicate that a remaining time of uplink data is less than or is less than or equal to a configured upper limit of remaining time and is greater than or is greater than or equal to a configured lower limit of remaining time.
- Condition 2-8: If there is uplink data, among uplink data in a particular LCG (dsr-lcg), having a remaining time satisfying a DSR trigger remaining time criterion corresponding to the LCG (dsr-lcg), a DSR may be triggered. The DSR trigger remaining time criterion may be the same as that described in condition 2-7 described above.

For example, uplink data satisfying a corresponding DSR trigger remaining time criterion being present/generated in a particular LCG (dsr-lcg)/LCH (dsr-lch) in conditions 2-1 to 2-8 above may mean at least one of the following options or a combination thereof.
- Option 1: For the LCG/LCH, a PDU having a remaining time satisfying the DSR trigger remaining time criterion and not belonging to a PDU set exists in a PDCP/RLC buffer.
- Option 2: A remaining time of a first/earliest-arriving PDU of a particular PDU set of the LCG/LCH satisfies the DSR trigger remaining time criterion, and at least one PDU/a segment of the PDU belonging to the PDU set exists in a PDCP/RLC buffer. For example, even a case where one or more PDUs in the PDU set have not yet arrived at a corresponding PDCP entity of the UE may be included in Option 2. For example, Option 2 may be valid only when PSIHI is configured for a QoS flow of the PDU set or when pdu-SetDiscard is configured for a corresponding PDCP entity/DRB/QoS flow of the PDU set.
- Option 3: A remaining time of a first/earliest-arriving PDU of a particular PDU set of the LCG/LCH satisfies the DSR trigger remaining time criterion, and one or more PDUs/PDU segments that have not yet arrived at the PDCP from the upper layer or exist in a PDCP/RCL buffer are included in the PDU set. For example, even a case where a PDU/PDU segment belonging to the PDU set does not exist in the PDCP/RCL buffer, but a PDU/PDU segment having not yet arrived at the PDCP layer from the upper layer exists may be included in Option 3. For example, Option 3 may be valid only when PSIHI is configured for a QoS flow of the PDU set or when pdu-SetDiscard is configured for a corresponding PDCP entity/DRB/QoS flow of the PDU set.
- Option 4: A remaining time of a first/earliest-arriving PDU of a particular PDU set of the LCG/LCH satisfies the DSR trigger remaining time criterion, all PDUs belonging to the PDU set have already arrived at the PDCP layer from the upper layer, and one or more PDU/PDU segments exist in a PDCP/RLC buffer. For example, Option 4 may be valid only when PSIHI is configured for a corresponding PDU set/LCH/QoS flow. For example, Option 4 may be valid only when pdu-SetDiscard is configured for a corresponding PDCP entity/DRB/QoS flow of the PDU set.
- Option 5: The base station may configure, through an RRC message, whether at least one of option 1 to option 4 is valid.

For example, in order to prevent excessive triggering of DSRs, the UE may apply at least one of the following options.
- The UE may not re-trigger a DSR for uplink data of an LCG/LCH/MAC entity having triggered a pending DSR that has not yet been canceled. For example, if an upper limit of remaining time is included in a DSR trigger remaining time criterion of an LCG/LCH/MAC entity including uplink data for which a DSR is to be newly triggered, and if the upper limit of remaining time is less than an upper limit of remaining time of another LCG/LCH/MAC entity that has already triggered a DSR, the UE may trigger a DSR for the uplink data. For example, an SR configuration for a DSR may be configured for each LCG/LCH, and if a DSR is triggered by a particular LCG/LCH, an SR of the LCG/LCH may be triggered.
- For example, if a DSR, which has not been canceled yet, has been triggered for other PDUs belonging to the same PDU set, no additional DSR may be triggered for a corresponding PDU.
- Even when multiple pending DSRs that have not yet been canceled exist, a single MAC PDU may include a maximum of one DSR MAC CE.

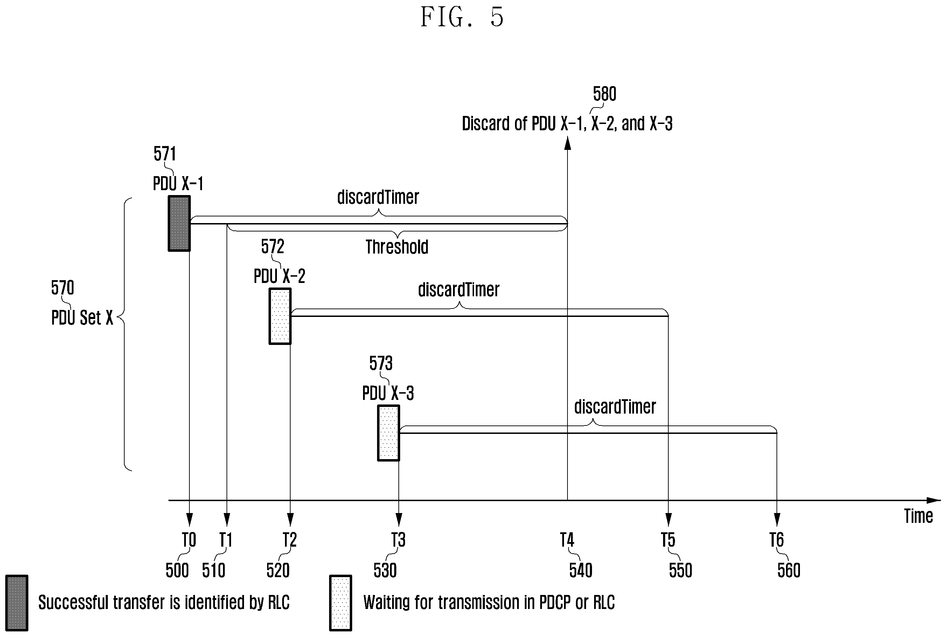

FIG. 5 is a diagram illustrating an operation of discarding a plurality of PDUs of a PDU set according to an embodiment of the disclosure.

According to an embodiment of the disclosure, multiple PDUs may be included in a PDU set, and the multiple PDUs may arrive at the PDCP layer of the UE at different time points.

Referring to FIG. 5, a particular PDU set 570 may include multiple PDUs 571, 572, and 573. Time points 500, 520, and 530 at which the multiple PDUs 571, 572, and 573 arrive from the upper layer of the UE at the PDCP layer may be different. For example, multiple PDUs of a particular PDU set may arrive at the PDCP layer in the form of PDCP SDUs, respectively. For example, a PDCP entity may operate a dedicated discardTimer for a new PDCP SDU when the PDCP SDU is generated. For example, an operation time from the start to the expiration of a discardTimer of a particular PDCP SDU may be determined as a discardTimer configuration value of a DRB/QoS flow to which the PDCP SDU belongs, based on a PDCP configuration value for each DRB/QoS flow. Therefore, multiple PDCP SDUs, including multiple PDUs of a particular PDU set, respectively, may have the same discardTimer configuration value. If multiple PDUs 561, 562, and 563 of a particular PDU set arrive at the PDCP entity at different times, even when the multiple PDCP SDUs have the same discardTimer configuration value, but time points at which respective discardTimers expire may be different.

For example, the base station may configure, through an RRC message, the UE to perform a PDCP SDU discard operation caused by expiration of a PDCP discardTimer in units of PDU sets. For example, the discard operation in units of PDU sets may be indicated by configuring a particular parameter (e.g., pdu-SetDiscard) or by setting pdu-SetDiscard to "True."

For example, when a discardTimer of a particular PDCP SDU of the UE expires, the PDCP entity of the UE may operate as follows.
- When a PDU corresponding to the PDCP SDU belongs to a particular PDU set, PDCP SDUs corresponding to all PDUs of the PDU set and corresponding PDCP data PDUs may be discarded. For example, referring to FIG. 5, when a discardTimer of PDU X-1 of PDU set X expires earliest compared to other PDUs (PDU X-2 and PDU X-3), PDCP SDUs and PDCP data PDUs corresponding to all the PDUs (PDU X-1, PDU X-2, and PDU X-3) of PDU set X may be discarded at a time point 540 at which the discardTimer of PDU X-1 expires. For example, the discard operation in units of PDU sets may be performed only when PSIHI is configured for a QoS flow to which a corresponding PDU set belongs. For example, the discard operation in units of PDU sets may be performed only when the base station has configured pdu-SetDiscard for a corresponding PDCP entity/DRB/QoS flow. For example, the discard operation in units of PDU sets may be performed only when the base station has configured pdu-SetDiscard for a corresponding PDCP entity/DRB/QoS flow, and PSIHI is configured for the QoS flow to which a corresponding PDU set belongs.
- If a PDCP data PDU for which the discard is indicated has already been transferred to the lower layer (e.g., the RLC layer), discard of the PDCP data PDU may also be indicated to the lower layer.

According to an embodiment, the base station may include, for each LCG (dsr-lcg)/LCH (dsr-lch), an identifier (e.g., SchedulingRequestId) indicating an SR configuration for a DSR triggered by a corresponding LCG (dsr-lcg)/LCH (dsr-lch) in configuration information of the LCG (dsr-lcg)/LCH (dsr-lch).

According to an embodiment, a new logical channel identifier (LCID) or extended LCID (eLCID) may be assigned for a DSR MAC CE in advance. An LCID or eLCID field of a MAC subheader of a DSR MAC CE transmitted by the UE may be configured to have the assigned LCID or eLCID to indicate that the corresponding MAC CE is a DSR MAC CE.

According to an embodiment, in order to trigger a DSR or in order to configure a delay-critical buffer size field and/or a (minimum) remaining time-specific buffer size field reported through a DSR, a MAC entity of a particular cell group of the UE may request, from an RLC entity and a PDCP entity corresponding to each LCH/LCG of the cell group, the amount of uplink data satisfying a particular remaining time criterion in a buffer of each of the entities.

As an embodiment, a buffer size indicated by a delay-critical buffer size field or a (minimum) remaining time-specific buffer size field for each LCH/LCG, which is reported through a DSR, may indicate a sum of uplink data satisfying a corresponding remaining time criterion, among uplink data in the entire RLC and PDCP buffers corresponding to the LCH/LCG, excluding uplink data included in a MAC PDU including the DSR.

For example, a particular PDU set or a PDU belonging to a particular PDU set satisfying a particular remaining time criterion may mean that a remaining time of a first PDU of the PDU set/a PDU that arrives earliest at the PDCP satisfies the remaining time criterion.

For example, when a buffer size indicated by a delay-critical buffer size field or a (minimum) remaining time-specific buffer size field for each LCH/LCG, which is reported through a DSR, is calculated: if at least one PDU of a particular PDU set has already arrived at the PDCP layer from the upper layer, and a remaining time of a first PDU of the PDU set/a PDU having arrived earliest at the PDCP layer satisfies a corresponding remaining time criterion, a PDU/PDU segment of the PDU set existing in an RLC/PDCP buffer may be included in the buffer size.

For example, when a buffer size indicated by a delay-critical buffer size field or a (minimum) remaining time-specific buffer size field for each LCH/LCG, which is reported through a DSR, is calculated: if all PDUs of a particular PDU set have already arrived at the PDCP layer from the upper layer, and a remaining time of a first PDU of the PDU set/a PDU having arrived earliest at the PDCP layer satisfies a corresponding remaining time criterion, a PDU/PDU segment of the PDU set existing in an RLC/PDCP buffer may be included in the buffer size.

For example, when a buffer size indicated by a delay-critical buffer size field or a (minimum) remaining time-specific buffer size field for each LCH/LCG, which is reported through a DSR, is calculated: if at least one PDU of a particular PDU set has already arrived at the PDCP layer from the upper layer and, only when PSIHI is configured for a QoS flow of the PDU set or pdu-SetDiscard is configured for a corresponding PDCP entity/DRB/QoS flow, a remaining time of a first PDU of the PDU set/a PDU having arrived earliest at the PDCP layer satisfies a corresponding remaining time criterion, a PDU/PDU segment of the PDU set existing in an RLC/PDCP buffer may be included in the buffer size.

For example, when a buffer size indicated by a delay-critical buffer size field or a (minimum) remaining time-specific buffer size field for each LCH/LCG, which is reported through a DSR, is calculated: if all PDUs of a particular PDU set have already arrived at the PDCP layer from the upper layer and, only when PSIHI is configured for a QoS flow of the PDU set or pdu-SetDiscard is configured for a corresponding PDCP entity/DRB/QoS flow, a remaining time of a first PDU of the PDU set/a PDU having arrived earliest at the PDCP layer satisfies a corresponding remaining time criterion, a PDU/PDU segment of the PDU set existing in an RLC/PDCP buffer may be included in the buffer size. For example, when a buffer size indicated by a delay-critical buffer size field or a (minimum) remaining time-specific buffer size field for each LCH/LCG, which is reported through a DSR, is calculated: if at least one PDU of a particular PDU set has already arrived at the PDCP layer from the upper layer, a remaining time of a first PDU of the PDU set/a PDU having arrived earliest at the PDCP layer satisfies a corresponding remaining time criterion, and one or more PDUs of the PDU set have not arrived at the PDCP layer yet, the PDUs of the PDU set having not arrived at the PDCP layer yet may also be included in the buffer size.

For example, when a buffer size indicated by a delay-critical buffer size field or a (minimum) remaining time-specific buffer size field for each LCH/LCG, which is reported through a DSR, is calculated: if at least one PDU of a particular PDU set has already arrived at the PDCP layer from the upper layer, a remaining time of a first PDU of the PDU set/a PDU having arrived earliest at the PDCP layer satisfies a corresponding remaining time criterion, and one or more PDUs of the PDU set have not arrived at the PDCP layer yet, only when PSIHI is configured for a QoS flow of the PDU set or pdu-SetDiscard is configured for a corresponding PDCP entity/DRB/QoS flow, the PDUs of the PDU set having not arrived at the PDCP layer yet may also be included in the buffer size.

For example, when a PDU of a PDU set having not arrived at the PDCP layer yet is included in a buffer size indicated by a delay-critical buffer size field or a (minimum) remaining time-specific buffer size field for each LCH/LCG, which is reported through a DSR, the UE may virtually generate a PDCP SDU or PDCP data PDU corresponding to the PDU according to a configuration of the PDCP entity and then include a size of the virtual PDCP SDU or PDCP data PDU.

For example, when a (minimum) remaining time field for each LCH/LCG, which is reported through a DSR, is determined: for a PDU set including a first PDU/a PDU having arrived earliest at the PDCP layer, the PDU having a remaining time satisfying a corresponding remaining time criterion, if at least one PDU/PDU segment of the PDU set remains in an RLC/PDCP buffer, the UE may report a remaining time for the PDU set.

For example, when a (minimum) remaining time field for each LCH/LCG, which is reported through a DSR, is determined: in a case where PSIHI is configured for a QoS flow of a particular PDU set or pdu-SetDiscard is configured for a corresponding PDCP entity/DRB/QoS flow of the PDU set, if a remaining time of a first PDU of the PDU set/a PDU having arrived earliest at the PDCP layer satisfies a corresponding remaining time criterion, and at least one PDU/PDU segment of the PDU set remains in an RLC/PDCP buffer, the UE may report a remaining time for the PDU set.

For example, when a (minimum) remaining time field for each LCH/LCG, which is reported through a DSR, is determined: for a PDU set including a first PDU/a PDU having arrived earliest at the PDCP layer, the PDU having a remaining time satisfying a corresponding remaining time criterion, if at least one PDU/PDU segment of the PDU set remains in an RLC/PDCP buffer, and all PDUs of the PDU set have already arrived at the PDCP layer, the UE may report a remaining time for the PDU set.

For example, when a (minimum) remaining time field for each LCH/LCG, which is reported through a DSR, is determined: in a case where there is a PDU set including a first PDU/a PDU having arrived earliest at the PDCP layer, the PDU having a remaining time satisfying a corresponding remaining time criterion, if one or multiple PDUs of the PDU set have not arrived at the PDCP layer yet, the UE may not report a remaining time for the PDU set. For example, the operation above may be performed only when PSIHI is configured for a QoS flow of the PDU set or when pdu-SetDiscard is configured for a corresponding PDCP entity/DRB/QoS flow of the PDU set.

For example, when a (minimum) remaining time field for each LCH/LCG, which is reported through a DSR, is determined: in a case where there is a PDU set including a first PDU/a PDU having arrived earliest at the PDCP layer, the PDU having a remaining time satisfying a corresponding remaining time criterion, if one or multiple PDUs of the PDU set have not arrived at the PDCP layer yet, only when PSIHI is configured for a QoS flow of the PDU set or when pdu-SetDiscard is configured for a corresponding PDCP entity/DRB/QoS flow, the UE may not report a remaining time for the PDU set.

For example, when a (minimum) remaining time field for each LCH/LCG, which is reported through a DSR, is determined: in a case where there is a PDU set including a first PDU/a PDU having arrived earliest at the PDCP layer, the PDU having a remaining time satisfying a corresponding remaining time criterion, even if one or multiple PDUs of the PDU set have not arrived at the PDCP layer yet, the UE may report a remaining time for the PDU set.

For example, when a (minimum) remaining time field for each LCH/LCG, which is reported through a DSR, is determined: in a case where there is a PDU set including a first PDU/a PDU having arrived earliest at the PDCP layer, the PDU having a remaining time satisfying a corresponding remaining time criterion, even if one or multiple PDUs of the PDU set have not arrived at the PDCP layer yet, only when PSIHI is configured for a QoS flow of the PDU set or when pdu-SetDiscard is configured for a corresponding PDCP entity/DRB/QoS flow, the UE may report a remaining time for the PDU set.

According to an embodiment of the disclosure, the UE may identify, in the PDCP/RLC/MAC layer, whether an entire PDU set size and a PSIHI configuration state for a particular PDU set of a particular QoS flow have been configured, according to the UE implementation.

According to an embodiment of the disclosure, an entire PDU set size and a PSIHI configuration state for a particular PDU set of a particular QoS flow may be indicated to the MAC/RLC layer of the UE from the PDCP layer.

According to an embodiment of the disclosure, the MAC layer of the UE may request, from the RLC layer, the amount of uplink data satisfying a particular remaining time criterion. When the RLC layer determines the amount of uplink data satisfying the remaining time criterion, the uplink data may include at least one of pieces of the following uplink data. For example, a PDU/PDU set belonging to the following uplink data may be considered as a PDU/PDU set existing in an RLC buffer. For example, in the disclosure, the remaining time criterion may refer to a corresponding DSR trigger remaining time criterion or a corresponding DSR reporting remaining time criterion.
- An RLC SDU and an RLC SDU segment that has not yet been included in an RLC data PDU and satisfies a remaining time criterion. For example, if a PDU corresponding to the RLC SDU/SDU segment belongs to a particular PDU set, only when a remaining time of a PDCP SDU corresponding to a first PDU of the PDU set/a PDU having arrived earliest at the PDCP satisfies the remaining time criterion, the RLC SDU/SDU segment may be included in the amount of the RLC layer uplink data satisfying the remaining time criterion. For example, the operation above may be performed only when PSIHI is configured for a QoS flow of the PDU set or when pdu-SetDiscard is configured for a corresponding PDCP entity/DRB/QoS flow of the PDU set.
- An RLC data PDU that is waiting for initial transmission and satisfies a remaining time criterion. For example, if a PDU corresponding to the RLC data PDU belongs to a particular PDU set, only when a remaining time of a PDCP SDU corresponding to a first PDU of the PDU set/a PDU having arrived earliest at the PDCP satisfies the remaining time criterion, the RLC data PDU may be included in the amount of the RLC layer uplink data satisfying the remaining time criterion. For example, the operation above may be performed only when PSIHI is configured for a QoS flow of the PDU set or when pdu-SetDiscard is configured for a corresponding PDCP entity/DRB/QoS flow of the PDU set.
- In an RLC AM mode, an RLC data PDU that is waiting for RLC retransmission and satisfies a remaining time criterion. For example, if a PDU corresponding to the RLC data PDU belongs to a particular PDU set, only when a remaining time of a PDCP SDU corresponding to a first PDU of the PDU set/a PDU having arrived earliest at the PDCP satisfies the remaining time criterion, the RLC data PDU may be included in the amount of the RLC layer uplink data satisfying the remaining time criterion. For example, the operation above may be performed only when PSIHI is configured for a QoS flow of the PDU set or when pdu-SetDiscard is configured for a corresponding PDCP entity/DRB/QoS flow of the PDU set.

According to an embodiment, a scheme/method of determining whether a particular RLC SDU/SDU segment/data PDU satisfies a particular remaining time criterion may be determined according to the UE internal implementation.

According to an embodiment, determination of whether a particular RLC SDU/SDU segment/data PDU satisfies a particular remaining time criterion may be made by an indication of a corresponding PDCP entity.

According to an embodiment, determination of whether a particular RLC SDU/SDU segment/data PDU satisfies a particular remaining time criterion may be made according to whether a remaining time of a PDCP discardTimer of the RLC SDU/SDU segment/data PDU satisfies the remaining time criterion. According to an embodiment, determination of a remaining time of a PDCP discardTimer of a particular RLC SDU/SDU segment/data PDU may be made according to the UE internal implementation.

According to an embodiment, the MAC layer of the UE may request, from the PDCP layer, the amount of uplink data satisfying a particular remaining time criterion. When the PDCP layer determines the amount of uplink data satisfying the remaining time criterion, the uplink data may include at least one of pieces of the following uplink data. For example, a PDU/PDU set belonging to the following uplink data may be considered as a PDU/PDU set existing in a PDCP buffer.
- A PDCP SDU that has not yet configured a PDCP data PDU and satisfies a remaining time criterion. For example, if a PDU corresponding to the PDCP SDU belongs to a particular PDU set, only when a remaining time of a PDCP SDU corresponding to a first PDU of the PDU set/a PDU having arrived earliest at the PDCP satisfies the remaining time criterion, the PDCP SDU may be included in the amount of the PDCP layer uplink data satisfying the remaining time criterion. For example, the operation above may be performed only when PSIHI is configured for a QoS flow of the PDU set or when pdu-SetDiscard is configured for a corresponding PDCP entity/DRB/QoS flow of the PDU set.
- A PDCP data PDU that has not yet been transferred to the lower layer (MAC or RLC) and satisfies a remaining time criterion. For example, if a PDU corresponding to the PDCP data PDU belongs to a particular PDU set, only when a remaining time of a PDCP SDU corresponding to a first PDU of the PDU set/a PDU having arrived earliest at the PDCP satisfies the remaining time criterion, the PDCP data PDU may be included in the amount of the PDCP layer uplink data satisfying the remaining time criterion. For example, the operation above may be performed only when PSIHI is configured for a QoS flow of the PDU set or when pdu-SetDiscard is configured for a corresponding PDCP entity/DRB/QoS flow of the PDU set.
- A PDCP SDU which is waiting for retransmission generated by PDCP entity re-establishment in an AM DRB and satisfies a remaining time criterion. For example, if a PDU corresponding to the PDCP SDU belongs to a particular PDU set, only when a remaining time of a PDCP SDU corresponding to a first PDU of the PDU set/a PDU having arrived earliest at the PDCP satisfies the remaining time criterion, the PDCP SDU may be included in the amount of the PDCP layer uplink data satisfying the remaining time criterion. For example, the operation above may be performed only when PSIHI is configured for a QoS flow of the PDU set or when pdu-SetDiscard is configured for a corresponding PDCP entity/DRB/QoS flow of the PDU set.
- A PDCP data PDU which is waiting for retransmission generated by PDCP data recovery in an AM DRB and satisfies a remaining time criterion. For example, if a PDU corresponding to the PDCP data PDU belongs to a particular PDU set, only when a remaining time of a PDCP SDU corresponding to a first PDU of the PDU set/a PDU having arrived earliest at the PDCP satisfies the remaining time criterion, the PDCP data PDU may be included in the amount of the PDCP layer uplink data satisfying the remaining time criterion. For example, the operation above may be performed only when PSIHI is configured for a QoS flow of the PDU set or when pdu-SetDiscard is configured for a corresponding PDCP entity/DRB/QoS flow of the PDU set.
- If a remaining time of a PDCP SDU corresponding to a first PDU of a particular PDU set/a PDU having arrived earliest at the PDCP satisfies a corresponding remaining time criterion, one or multiple PDUs of the PDU set having not arrived at the PDCP layer yet may also be included in the amount of the PDCP layer uplink data satisfying the remaining time criterion. For example, the operation above may be performed only when PSIHI is configured for a QoS flow of the PDU set or when pdu-SetDiscard is configured for a corresponding PDCP entity/DRB/QoS flow of the PDU set.

According to an embodiment, in a case where a PDCP entity associated with at least two RLC entities informs the MAC entity of the amount of PDCP data satisfying a particular remaining time criterion, the PDCP entity may operate as follows.
- With regard to a radio bearer (RB) for which PDCP duplication is activated:
   ■ The PDCP entity may inform a MAC entity associated with a primary RLC entity of the amount of uplink data satisfying the remaining time criterion of the PDCP entity.
   ■ The PDCP entity may inform a MAC entity associated with a remaining RLC entity activated for PDCP duplication other than the primary RLC entity, of the amount of uplink data remaining after excluding a PDCP control PDU from uplink data satisfying the remaining time criterion of the PDCP entity.
   ■ The PDCP entity may inform a MAC entity associated with an RLC entity deactivated for PDCP duplication that the amount of uplink data satisfying the remaining time criterion is 0.
- With regard to an RB or a dual active protocol stack (DAPS) bearer for which PDCP duplication is deactivated:
   ■ In a case where a split secondary RLC entity is configured, if a sum of the amount of PDCP data satisfying the remaining time criterion and the amount of RLC data for initial transmission in the primary RLC entity and the split secondary RLC entity is greater than or equal to a particular threshold configured by the base station:
      ◆ The PDCP entity may inform both two MAC entities associated with the primary RLC entity and the split secondary RLC entity of the amount of PDCP data satisfying the remaining time criterion. For example, the PDCP entity may inform a MAC entity associated with an RLC entity other than the primary RLC entity and the split secondary RLC entity, that the amount of PDCP data satisfying the remaining time criterion is 0.
   ■ In a case where a transmitting PDCP entity is a DAPS bearer:
      ◆ If no uplink data switching is requested:
         - The PDCP entity may inform a MAC entity associated with a source cell of the amount of PDCP data satisfying the remaining time criterion.
      ◆ If uplink data switching is requested:
         - The PDCP entity may inform a MAC entity associated with a target cell of the amount of PDCP data satisfying the remaining time criterion.
   ■ Otherwise:
      ◆ The PDCP entity may inform a MAC entity associated with the primary RLC entity of the amount of PDCP data satisfying the remaining time criterion.
      ◆ The PDCP entity may inform a MAC entity associated with an RLC entity other than the primary RLC entity that the amount of PDCP data satisfying the remaining time criterion is 0.

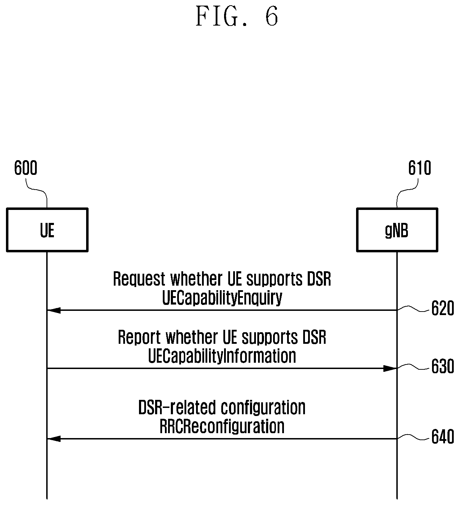

FIG. 6 is a diagram illustrating a procedure in which a base station and a UE identify whether the UE supports a DSR and provide a DSR-related configuration through RRC signaling, according to an embodiment of the disclosure.

Referring to FIG. 6, in operation 620, a base station may transfer/transmit a UE capability request (UECapabilityEnquiry) message for requesting a capability report to a UE in an RRC_CONNECTED state. The base station may include a UE capability request for each radio access technology (RAT) type in the UECapabilityEnquiry message. The UE capability request for each RAT type may include requested frequency band information. In addition, when requesting, through the UECapabilityEnquiry message, the UE to generate a UECapabilityInformation message, the base station may include filtering information capable of indicating a condition and a limitation. The base station may indicate, through the filtering information, whether the UE is required to report whether a DSR is supported.

In operation 630, the UE may configure a UE capability information (UECapabilityInformation) message corresponding to the UECapabilityEnquiry message to report a response for the UECapabilityEnquiry message to the base station. The UECapabilityInformation message may include a parameter/indicator indicating whether the UE supports a DSR. For example, the parameter or indicator may be 1-bit information. According to another embodiment, if the UECapabilityInformation message includes a parameter or indicator indicating that the UE supports a DSR, this may indicate that a DSR is supported, and if not included, this may indicate that a DSR is not supported.

The base station may determine whether the UE supports a DSR, based on the received UECapabilityInformation message. When the base station determines that the UE supports a DSR, the base station may transmit an RRCReconfiguration message including a DSR-related configuration in operation 640. The UE may apply DSR-related configuration information included in the received RRCReconfiguration message. The DSR-related configuration may include all DSR-related configurations that the base station may configure for the UE as described above in the disclosure.

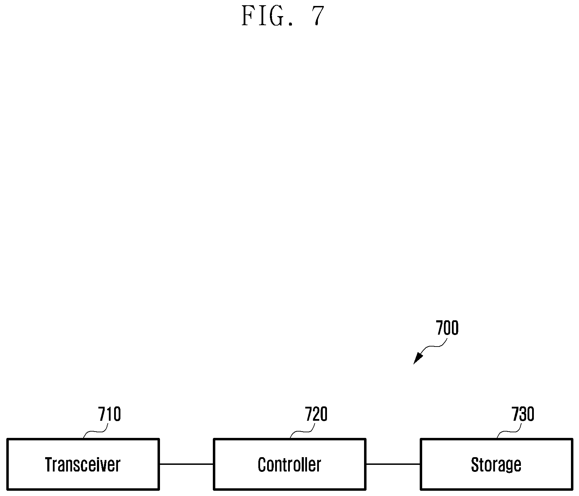

FIG. 7 illustrates a structure of a UE according to an embodiment of the disclosure.

Referring to FIG. 7, the UE 700 may include a transceiver 710, a controller 720, and a storage 730. The transceiver 710, the controller 720, and the storage 730 of the UE 700 may operate according to at least one or a combination of methods corresponding to the above-described embodiments. As used herein, the controller may be defined as a circuit, an application specific integrated circuit, or at least one processor.

The transceiver 710 may transmit/receive signals with other network entities. The transceiver 710 may receive, for example, system information, synchronization signals, or reference signals from the base station.

The controller 720 may control the overall operation of the UE according to the embodiments proposed in the disclosure. For example, the controller 720 may control signal flows between the respective blocks to perform operations according to the above-described flowcharts. Specifically, the controller 720 may control the operation proposed in the disclosure in order to trigger a DSR according to the disclosure or transmit the DSR to a base station.

In addition, the storage 730 may store at least one of information transmitted/received through the transceiver 710 and information generated through the controller 720.

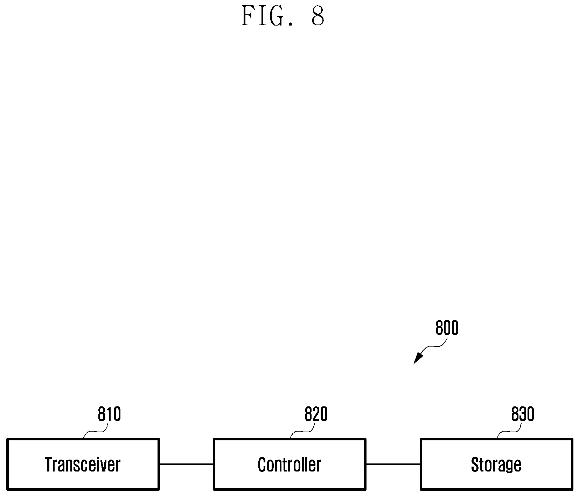

FIG. 8 illustrates a structure of a base station according to an embodiment of the disclosure.

Referring to FIG. 8, the base station 800 may include a transceiver 810, a controller 820, and a storage 830. The transceiver 810, the controller 820, and the storage 830 of the base station 800 may operate according to at least one or a combination of methods corresponding to the above-described embodiments. As used herein, the controller may be defined as a circuit, an application specific integrated circuit, or at least one processor.

The transceiver 810 may transmit/receive signals with other network entities. The transceiver 810 may transmit, for example, system information, synchronization signals, or reference signals to UEs.

The controller 810 may control the overall operation of the base station according to the embodiments proposed in the disclosure. For example, the controller 820 may control signal flows between the respective blocks to perform operations according to the above-described flowcharts. Specifically, the controller 820 may control the operation proposed in the disclosure in order to transmit DSR configuration information according to the disclosure to a UE, receive a DSR from the UE, or allocate uplink resources, based on the received DSR.

In addition, the storage 830 may store at least one of information transmitted/received through the transceiver 810 and information generated through the controller 820.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. It will be apparent to those skilled in the art that, in addition to the embodiments set forth herein, other variants based on the technical idea of the disclosure may be implemented. Also, the above respective embodiments may be employed in combination, as necessary.

## Claims

1. A method performed by a terminal in a wireless communication system, the method comprising:
receiving, from a base station, configuration information indicating a remaining time threshold value for triggering a delay status report (DSR);
triggering the DSR in case that a remaining time of a packet data convergence protocol (PDCP) discard timer of data buffered in a logical channel is less than the remaining time threshold value; and
transmitting, to the base station, a medium access control-control element (MAC CE) for the DSR,
wherein the MAC CE includes a field indicating a value of a PDCP discard timer having a shortest remaining time for a logical channel group (LCG) of the logical channel at a time of a first symbol for an initial physical uplink shared channel (PUSCH) transmission that includes the MAC CE.

2. The method of claim 1, wherein the remaining time threshold value is configured per LCG and has a unit of milliseconds.

3. The method of claim 1, wherein the MAC CE further includes a field indicating the LCG, a field indicating a buffer size of delay-critical data for the LCG, and a field indicating a buffer size table to which the field indicating the buffer size refers.

4. The method of claim 1, wherein the DSR is triggered in case that there is no pending DSR for the logical channel.

5. A method performed by a base station in a wireless communication system, the method comprising:
transmitting, to a terminal, configuration information indicating a remaining time threshold value for triggering a delay status report (DSR); and
receiving, from the terminal, a medium access control-control element (MAC CE) for the DSR in case that a remaining time of a packet data convergence protocol (PDCP) discard timer of data buffered in a logical channel of the terminal is less than the remaining time threshold value,
wherein the MAC CE includes a field indicating a value of a PDCP discard timer having a shortest remaining time for a logical channel group (LCG) of the logical channel at a time of a first symbol for an initial physical uplink shared channel (PUSCH) reception that includes the MAC CE.

6. The method of claim 5, wherein the remaining time threshold value is configured per LCG and has a unit of milliseconds.

7. The method of claim 5, wherein the MAC CE further includes a field indicating the LCG, a field indicating a buffer size of delay-critical data for the LCG, and a field indicating a buffer size table to which the field indicating the buffer size refers.

8. The method of claim 5, wherein the DSR is triggered in case that there is no pending DSR for the logical channel in the terminal.

9. A terminal in a wireless communication system, the terminal comprising:
a transceiver; and
a controller configured to:
receive, from a base station via the transceiver, configuration information indicating a remaining time threshold value for triggering a delay status report (DSR);
trigger the DSR in case that a remaining time of a packet data convergence protocol (PDCP) discard timer of data buffered in a logical channel is less than the remaining time threshold value; and
transmit, to the base station via the transceiver, a medium access control-control element (MAC CE) for the DSR, and
wherein the MAC CE includes a field indicating a value of a PDCP discard timer having a shortest remaining time for a logical channel group (LCG) of the logical channel at a time of a first symbol for an initial physical uplink shared channel (PUSCH) transmission that includes the MAC CE.

10. The terminal of claim 9, wherein the remaining time threshold value is configured per LCG and has a unit of milliseconds.

11. The terminal of claim 9, wherein the MAC CE further includes a field indicating the LCG, a field indicating a buffer size of delay-critical data for the LCG, and a field indicating a buffer size table to which the field indicating the buffer size refers.

12. The terminal of claim 9, wherein the DSR is triggered in case that there is no pending DSR for the logical channel.

13. A base station in a wireless communication system, the base station comprising:
a transceiver; and
a controller configured to:
transmit, to a terminal via the transceiver, configuration information indicating a remaining time threshold value for triggering a delay status report (DSR); and
receive, from the terminal via the transceiver, a medium access control-control element (MAC CE) for the DSR in case that a remaining time of a packet data convergence protocol (PDCP) discard timer of data buffered in a logical channel of the terminal is less than the remaining time threshold value, and
wherein the MAC CE includes a field indicating a value of a PDCP discard timer having a shortest remaining time for a logical channel group (LCG) of the logical channel at a time of a first symbol for an initial physical uplink shared channel (PUSCH) reception that includes the MAC CE.

14. The base station of claim 13, wherein the remaining time threshold value is configured per LCG and has a unit of milliseconds.

15. The base station of claim 13, wherein the MAC CE further includes a field indicating the LCG, a field indicating a buffer size of delay-critical data for the LCG, and a field indicating a buffer size table to which the field indicating the buffer size refers.
